# EUROPEAN PATENT APPLICATION

(11) **EP 1 246 145 A2**
(43) Date of publication of application: **02.10.2002**
(21) Application number: 01610071.1
(22) Date of filing: 05.07.2001
(51) Int. Cl.: G07F 19/00, G06F 17/60, G07F 7/00

(54) **A method and system for purchasing goods**

(30) Priority: 29.03.2001 DK 200100520; 09.04.2001 DK 200100582
(71) Applicant: Telefonaktiebolaget L M Ericsson (Publ), 126 25 Stockholm (SE)
(72) Inventor: Jensen, Michael Hejselbak, 9380 Vestbjerg (DK); Skagen, Anders, 9210 Aalborg (DK); Stensballe, Jan, 9500 Hobro (DK)
(74) Representative: Wittrup, Flemming

(57) **Abstract**

Disclosed is a method of supplying and/or receiving goods by a transaction system with a number of transaction points (101,102,103,104) to/from a customer using a mobile terminal (110). The method comprises the steps of establishing a wireless communications link (116) between the transaction system and the mobile terminal, selecting a transaction point, communicating at least a first data item via the wireless communications link between the transaction system and the mobile terminal indicative of the selected transaction point, and providing and/or receiving said goods to/from the customer at the selected transaction point.

## Description

### FIELD OF THE INVENTION

This invention relates to the supplying and/or receiving of goods by a transaction system with a number of transaction points to/from a customer using a mobile terminal.

### BACKGROUND OF THE INVENTION

Electronic vending machines for supplying goods to customers are known. The increasing availability of mobile terminals, such as mobile phones, have made it desirable to utilise mobile terminals for performing transactions like the payment for goods.

The international patent application WO 01/20844 describes a method of downloading data stored on multiple servers via a wireless vending machine. According to this prior-art method a short-range data connection is established between a vending machine and a mobile phone. A user may select available data items via a menu displayed on the display of the mobile phone. A price corresponding to the selected data items is displayed on the phone and the user may order, download and initiate the payment for the selected items via the short-range connection.

However, the above prior art system does only address the problem of downloading data from multiple servers via an electronic vending machine, i.e. a single outlet point. This prior art method is not concerned with physical goods that cannot be provided via a communications channel. Consequently, the supply of goods via multiple outlet points is not addressed in this prior art document.

The German patent DE 199 61 793 discloses a method of selecting and paying for physical items from a vending machine via a mobile telephone where two connections are established by the mobile telephone. A first connection is established via a direct communications channel between the mobile phone and the vending machine. This connection is used for transmitting product information from the vending machine to the mobile phone and for selecting items via the user interface of the phone. A second connection is established between the mobile phone and a server system by calling a predetermined number via a cellular telecommunications network. This second connection is used for the authentication and initiation of the payment for the selected items.

The above prior art method involves the problem that two communications links need to be established, thereby increasing the time required for the total purchase transaction. Furthermore, the above prior art method can only be performed in areas with cellular network coverage.

The above prior art methods involve the problem that a user has to identify the vending machine before connecting to the selected vending machine. For example, the user has to know a phone number or some other logical address identifying the selected vending machine, or the user has to be in close vicinity of the selected vending machine, e.g. in order to establish an infrared communications link. This causes considerable inconvenience to the user and requires additional time, thereby reducing the throughput of transactions of a vending machine.

Furthermore, in cases of multiple vending machines located at the same location, the above disadvantage is a possible source of errors potentially causing the customer to connect to the wrong machine, thereby further reducing the throughput of transactions and increasing the inconvenience to the user.

The above and other problems are solved by a method of supplying and/or receiving goods by a transaction system with a number of transaction points to/from a customer using a mobile terminal, the method comprising the step of establishing a wireless communications link between the transaction system and the mobile terminal; characterised in that the method further comprises the steps of
- selecting one of the number of transaction points;
- communicating at least a first data item via the wireless communications link between the transaction system and the mobile terminal indicative of the selected transaction point; and
- providing and/or receiving said goods to/from the customer at the selected transaction point.

Hence, the identity of a selected transaction point where the goods are supplied/received is communicated between the mobile terminal and the transaction system, thereby providing a single point of access to the customer irrespective of which transaction point is selected. Consequently, a customer may select the desired goods and/or a transaction point during a single communications session between the mobile terminal and the transaction system, e.g. a vending system with multiple vending machines or outlet points. Therefore, the customer does not need to know beforehand the phone number or logical address of the selected transaction point, and the customer does not have to inspect different individual vending machines or the like before connecting to one of them. Consequently, the time required for a transaction is reduced and the possibility of connecting to a wrong vending machine is eliminated.

The term transaction point comprises a location where a predetermined amount and/or number of goods, material, etc., is/are dispensed to and/or deposited by a customer. Hence, at a transaction point, selected goods are exchanged between the transaction system and the customer, where the term exchange comprises the supply of goods to the customer, the reception of goods from the customer, or a combination of supplying and receiving goods. A transaction point may be an outlet point. Examples of outlet points include a petrol pump, a vending machine for goods such as beverages, ice cream, flowers, newspapers, food, etc. Other examples of transaction points include disposal points, e.g. a point where a certain type of garbage may be disposed, such as at a recycling site, a dock where a truck unloads delivered goods, or the like. A transaction point may operate automatically, it may require interaction with the customer, e.g. lifting the nozzle of a petrol pump, or it may be staffed by an operator, e.g. a customer service window of a drive-through restaurant. In a preferred embodiment of the invention the transaction points comprise petrol pumps at a petrol station. The transaction system comprises a number of transaction points, preferably controlled by a data processing system.

It is a further advantage of the invention, that the different transaction points of a transaction system do not have to be equipped with individual wireless transmitters and/or receivers and/or with suitable processing means in order to communicate with the customer's mobile terminal. Consequently, the transaction points may be kept rather simple and, thus, inexpensive.

It is a further advantage of the invention that a uniform user interface is provided to the user irrespectively of which of a number of transaction points is selected. Consequently, the customer experiences the transaction, e.g. a purchase, as a simple and safe operation.

When the method further comprises the step of communicating a second data item via the wireless communications link between the mobile terminal and the transaction system indicating an authorisation to transfer a predetermined amount from a predetermined customer account, the payment for the selected goods is initiated via the same communications link. Consequently, no additional communications link needs to be established, thereby reducing the time required for the transaction.

Furthermore, as the method according to the invention does not require a communications link established via a cellular telecommunications network, such as a GSM network, no costs for such a communications link arise. It is a further advantage of the invention that it does not require network coverage of a telecommunications network. Consequently, the method may even be carried out in areas without network coverage, in areas where the network coverage is temporarily unavailable, and at locations, e.g. at petrol stations, where it is prohibited to turn on the radio transmitter which allows a mobile telephone to access a cellular network. The payment transaction initiated by the mobile terminal may be performed using the Mobile electronic Transaction (MeT) standard.

In a preferred embodiment of the invention, the step of communicating at least a first data item further comprises the steps of
- transmitting a third data item from the transaction system to the mobile terminal indicative of a list of selectable transaction points;
- presenting at least a part of the list of selectable transaction points to the customer; and
- transmitting the first data item from the mobile terminal to the transaction system in response to an input received from the customer.

Consequently, the user may, via the user interface of a mobile terminal, select the transaction point, where the user wishes to receive/deposit any selected goods, thereby allowing the customer to select the most convenient transaction point. For example the customer may select the closest transaction point, the one which is easiest to reach or where there is the shortest waiting time, or the customer may select the transaction point according to which types of goods are available at the selected transaction point, e.g. which type of petrol is available at a selected petrol pump at a petrol station.

Preferably, the list of transaction points may be limited to transaction points which are currently available, i.e. not occupied by other transactions, out of order, or the like, thereby avoiding erroneous selections of unavailable transaction points.

In a further preferred embodiment of the invention, the list of selectable transaction points is generated by the transaction system according to customer profile data stored on a storage medium accessible to the transaction system. For example, the transaction system may use previous purchase data of a customer to place transaction points with the customer's preferred goods on top of the list. For example, if a customer usually purchases a certain type of petrol, such as diesel, the petrol pumps for diesel may be put on top of the list of selectable petrol pumps. Alternatively or additionally, the diesel pumps may be marked as such when presented to the customer via the user interface of the mobile terminal. Other types of customer profile data may include age, sex, address, profession, etc.

When the method further comprises the step of assigning a predetermined transaction point to the mobile terminal by the transaction system; and the step of communicating at least a first data item comprises the step of transmitting the first data item from the transaction system to the mobile terminal, the transaction system selects a suitable transaction point and informs the customer, via the mobile terminal, where to receive the purchased goods, deposit goods, etc. Hence, the transaction system may optimise the total flow of customers, e.g. in order to minimise waiting times for customers or to ensure that the supply of goods at different vending machines is reduced uniformly, thereby increasing the time intervals between necessary refills of individual outlets.

When the method further comprises the step of transmitting a fourth data item from the mobile terminal to the transaction system indicative of a number of goods selected by the customer, the customer may select the goods the customer wishes to purchase via the user interface of the mobile terminal. Consequently, the customer only needs to interact with one user interface, and the customer can use the user interface of the mobile terminal which the customer is familiar with.

In a preferred embodiment of the invention, the method further comprises the step of transmitting a fifth data item from the transaction system to the mobile terminal indicative of a list of selectable goods. Preferably, if a transaction point is already selected, the list of selectable goods comprises goods available at the selected transaction point, thereby avoiding erroneous selections of goods which are not available. Furthermore the list is kept short, thereby making its presentation more user-friendly and requiring less time to transmit it from the transaction system to the mobile terminal. If no transaction point has been selected yet, the transaction point may subsequently be selected based on the selection of goods. This has the advantage that the customer does not need to know in advance which items are available at which transaction point.

When the list of selectable goods is generated by the transaction system according to customer profile data stored on a storage medium accessible to the transaction system, the list may be prioritised according to customer preferences, previous purchase history, or the like, thereby making the selection process more efficient.

In another preferred embodiment of the invention, the step of establishing a wireless communications link comprises the steps of
- detecting the presence of the mobile terminal in a predetermined proximity of the transaction system by the transaction system; and
- initiating establishing the wireless communications link by the transaction system.

Consequently, the communications link is generated automatically, and the customer does not need to enter any phone number or the like in order to manually establish a connection. Furthermore, the transaction system may cause the mobile terminal to present a welcome menu to the customer, thereby catching the customer's attention and informing him about the possible options and/or giving relevant directions.

In another preferred embodiment of the invention, the step of providing and/or receiving said goods to/from the customer further comprises the steps of
- detecting at least one of a quantity and a type of the goods provided to and/or received from the customer; and
- transmitting a sixth data item from the transaction system to the mobile terminal indicative of the detected quantity and/or type of goods provided to and/or received from the customer and a corresponding total price.

Consequently, the customer may, via the user interface of the mobile terminal, verify the quantity and/or amount of the received/deposited items. Furthermore, the electronic payment transaction may be based on the actual type and amount of received/deposited goods.

The wireless communications link may be based on any suitable wireless communications technology, e.g. radio-based communication or communication using other electromagnetic radiation, e.g. infrared radiation. Preferably the communications link is a short-range communications link operating in a sufficient range around the transaction points. Examples of known communications standards for short range wireless communications comprise Bluetooth and IrDA (Infrared Data Association). This has the further advantage that the communications link does not have to be established via any network provider, and that the communication only requires little power provided by the mobile terminal.

In yet another preferred embodiment of the invention, the wireless communications link is a Bluetooth link. Bluetooth is a short-range RF based communications technology operating at 2.4 GHz and with a range of currently up to approx. 10 m. However, future versions of Bluetooth are expected to operate at larger distances, e.g. 100 m. Furthermore, it is an advantage that Bluetooth is not direction sensitive and that it provides the possibility of creating ad-hoc connections between Bluetooth devices without the need of user interaction. Consequently, a wireless communications link may already be established when the customer is approaching the transaction system and even in a certain distance from it. The link may be established automatically or in response to a user action.

Preferably, the communication utilises one or more suitable communications protocols and/or standards. Examples of such standards include Transmission Control Protocol (TCP), Internet Protocol (IP), User Datagram Protocol (UDP), Wireless Application Protocol (WAP), Wireless Transport Layer Security (WTLS), Wireless Identity Module (WIM), Wireless Public Key Infrastructure (WPKI), Mobile electronic Transaction (MeT) initiative, Hypertext Markup Language (HTML), Extensible Markup Language (XML), Hypertext Transfer Protocol (HTTP), Secure Hypertext Transfer Protocol (HTTPS), Secure Sockets Layer (SSL), etc. In a preferred embodiment of the invention, the wireless communications link uses a WAP protocol, e.g. dynamic WAP pages.

The term mobile terminal comprises any suitable electronic device which may be carried by the customer. Examples of mobile terminals include mobile telephones, Personal Digital Assistants (PDA), communicators, other hand-held computers, or the like. As the mobile terminal may comprise security sensitive information, such as credit card numbers, digital signatures, PIN-codes, or the like, the mobile terminal is, preferably, a personal device or a device which may be personalised, e.g. by inserting a personalised module, e.g. a storage and/or processing module such as a smart card, a SIM card or the like. It is advantageous to use a customer's personal device, e.g. the customer's mobile telephone or PDA as a mobile terminal, since the customer trusts the device and is familiar with its use, thereby ensuring an efficient use of the device. In the following a mobile terminal will also be referred to as a PTD (Personal Trusted Device).

In a preferred embodiment of the invention the mobile terminal is a mobile telephone. Consequently, as the customer is familiar with the mobile telephone and its user interface, the transaction is perceived as being simple and safe. Furthermore, the devices which are available in modern mobile telephones, such as display, keypad, Bluetooth transceiver, IrDA port, etc. may be utilised for the method according to the invention, thereby reducing costs, weight and energy consumption.

Preferably, the mobile terminal comprises suitable input and output means. The term input means may comprise a keyboard, a keypad, a button and or an arrangement of buttons, a touch screen, a pointing device, such as a mouse, a trackball, a touch pad, a digital pen, or the like. The term input means may further comprise other forms of man-machine interfaces, such as a voice interface, or the like. The term output means may comprise a display device, such as a monitor, a liquid crystal display, a cathode ray tube to display a graphical user interface, or the like. Alternatively or additionally, the output means may comprise an audible output device, such as a sound card and/or a speaker.

In a further preferred embodiment of the invention the method comprises the steps of
- detecting the presence of the mobile terminal in a predetermined proximity of the transaction system;
- establishing the wireless communications link;
- in response to an input by the customer, transmitting an sevenths data item indicative of a selected petrol pump from the mobile terminal to the transaction system;
- transmitting an electronic contract from the transaction system to the mobile terminal;
- in response to an input by the customer, transmitting an electronically signed contract from the mobile terminal to the transaction system;
- initiating authorisation of the signed contract by the transaction system;
- fuelling a car from the selected petrol pump;
- detecting and transmitting to the mobile terminal status information about the fuelling of the car by the transaction system.

The invention further relates to a transaction system for supplying and/or receiving goods to/from a customer carrying a mobile terminal, the transaction system including a number of transaction points for providing and/or receiving said goods to/from the customer; and communications means for establishing a wireless communications link between the transaction system and the mobile terminal; characterised in that
- the system further comprises means for selecting one of the number of transaction points; and
- the communications means is adapted to communicate at least a first data item via the wireless communications link between the transaction system and the mobile terminal indicative of the selected transaction point.

Hence, the system provides a single point of access to the customer where the customer may select the desired goods and/or a transaction point during a single communications session between the mobile terminal and the transaction system without having to know beforehand the phone number or logical address of the selected transaction point. For example, the customer does not have to inspect different individual vending machines before connecting to one of them, thereby reducing the time required for a purchase as well as eliminating the possibility of connecting to a wrong vending machine.

It is a further advantage of the invention, that the different transaction points of a transaction system do not have to be equipped with individual wireless transmitters and/or receivers and/or with suitable processing means in order to communicate with the customer's mobile terminal. Consequently, the transaction points may be kept rather simple and, thus, inexpensive.

It is a further advantage of the invention that a uniform user interface is provided to the user irrespectively of which of a number of transaction points is selected. Consequently, the customer experiences the transaction as a simple and safe operation.

It is a further advantage of the invention that it does not require network coverage of a telecommunications network.

The term communications means comprises a transmitter, transceiver, and/or a receiver adapted to establish and transmit/receive data via the wireless communications link.

In a preferred embodiment of the invention, the transaction system comprises processing means connected to the communications means and adapted to manage an electronic transaction between the mobile terminal and the transaction system.

The processing means may comprise a microprocessor, an application-specific integrated circuit, or another integrated circuit, a smart card, a data processing system, e.g. a general purpose computer adapted by suitable software, or the like.

In a further preferred embodiment of the invention, the processing means is adapted to select one of the number of transaction points and to cause the communications means to transmit an identification of the selected transaction point to the mobile terminal. Hence, the transaction system may optimise the total flow of customers, e.g. in order to minimise waiting times for customers or to ensure that the supply of goods at different outlet points is reduced uniformly, thereby increasing the time intervals between necessary refills of individual outlets.

In another preferred embodiment of the invention, the communications means is adapted to receive the first data item indicative of the selected transaction point from the mobile terminal, and the processing means is adapted to generate control signals for controlling the selected transaction point.

Consequently, the user may select the transaction point, where the user wishes to receive/deposit any selected goods, via the user interface of the user's mobile terminal, thereby allowing the customer to select the most convenient transaction point.

In a further preferred embodiment of the invention, the transaction points each comprise a corresponding control circuit adapted to control the transaction point in response to control signals generated by the processing means.

In a further preferred embodiment of the invention, the control circuits each comprise sensor means for detecting the status of the transaction point, and the control circuits are adapted to send corresponding status information to the processing means. Consequently, information about the status of the transaction point including the quantity and/or amount of goods dispensed/received may be transmitted to and displayed by the mobile terminal. Furthermore, the electronic payment transaction may be based on the actual type and amount of dispensed/received goods.

Furthermore, the above discussed features and steps of the method according to the invention may be incorporated in the system according to the invention.

The invention further relates to a mobile terminal adapted for use in the method described above and in the following.

The invention further relates to a computer program comprising code adapted to cooperatively perform the steps of the method described above and in the following.

The invention further relates to a computer program comprising code adapted to perform the following steps when the program is run on a mobile terminal having established a wireless communications link with a transaction system including a number of transaction points adapted to provide and/or receive selected goods to/from a customer:
- selecting one of the number of transaction points;
- transmitting at least a first data item via the wireless communications link to the transaction system indicative of the selected transaction point; and
- receiving an acknowledgement that said goods have been provided to and/or received from the customer at the selected transaction point.

In a preferred embodiment of the invention, the computer program is embodied as a data signal, for example, a computer program, e.g. a Java program, which is transmitted from the transaction system to the mobile terminal via the communications link.

The invention further relates to a computer program comprising code adapted to perform the following steps when the program is run on a computer of a transaction system including a number of transaction points adapted to provide and/or receive selected goods to/from a customer carrying a mobile terminal:
- establishing a wireless communications link between the transaction system and the mobile terminal;
- cooperatively with the mobile terminal selecting one of the number of transaction points;
- determining that said goods have been provided to and/or received from the customer at the selected transaction point.

In a preferred embodiment of the invention, the computer program is embodied on a computer-readable medium. The term computer-readable medium comprises magnetic tape, optical disc, digital video disk (DVD), compact disc (CD or CD-ROM), mini-disc, hard disk, floppy disk, ferroelectric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, etc.

Again, the above discussed features and steps of the method according to the invention may be incorporated in the above computer programs according to the invention.

### BRIEF DESCRIPTION OF THE DRAWINGS

The invention will be explained more fully below in connection with preferred embodiments and with reference to the drawings, in which:
fig. 1 shows a schematic view of a pump control system at a petrol station according to a first embodiment of a system according to the invention;
fig. 2 shows a schematic view of a series of screen pictures displayed by a mobile terminal according to the first embodiment of the invention;
fig. 3 shows a flow diagram of a method of supplying fuel by a pump control system according to an embodiment of the invention;
fig. 4 shows a schematic view of a message flow between the components of the system of fig. 1;
fig. 5 shows a schematic view of a fast food vending system according to a second embodiment of the invention; and
fig. 6 shows a flow diagram of a method of supplying food by a fast food vending system according to an embodiment of the invention.

### DETAILED DESCRIPTION OF PREFERRED EMBODIMENTS

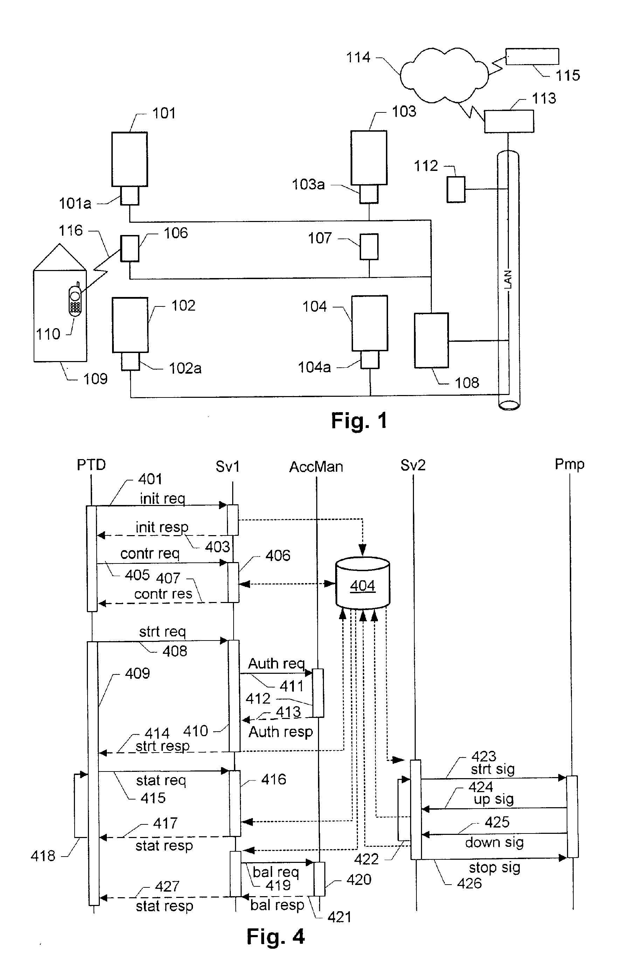

Fig. 1 shows a schematic view of a pump control system at a petrol station according to a first embodiment of the invention. The pump control system comprises pump control circuits 101a, 102a, 103a, and 104a controlling the fuel pumps 101-104, respectively. The pump control circuits are connected to a central control computer 108 which controls the pumps 101-104 via the respective control circuits. For example, the control circuits may be PLC based circuits which are controlled, e.g. via a serial interface or a local area network, by a software application running on the control computer 108. Alternatively, the control computer may use XML over HTTP to communicate, e.g. via a wired local area network (LAN), with the pump control circuits and/or other equipment of the infrastructure of the petrol station, such as cash registers and car wash systems. The control computer 108 is further connected, e.g. via a LAN, to Bluetooth transceivers 106 and 107 providing access to the LAN from a Bluetooth piconet, e.g. as specified by the LAN access profile of the Bluetooth specification ("Specification of the Bluetooth System", v. 1.1 part K:9). Alternatively, the control computer 108 may be connected to the transceivers 106-107 by another suitable connection, e.g. a communications network, an intranet, a wired or a wireless connection, a serial or parallel line, a USB interface, or the like. Preferably, the Bluetooth transceivers 106-107 operate in an inquiry mode. In this mode the transceivers constantly or periodically attempt to discover and identify Bluetooth devices within their respective ranges. When a Bluetooth device is detected, a Bluetooth connection is established according to standard Bluetooth mechanisms. In the example of fig. 1, the transceiver 106 has established a connection 116 to a mobile terminal 110 in a car 109 in the proximity of the pump 102. At the same time, other mobile terminals may have established respective communications links to one of the transceivers 106 and 107, thereby allowing the simultaneous processing of several transactions.

The control computer 108 may further be connected, e.g. via a firewall 113 connected to the LAN and a communications network 114 such as a WAN or the Internet, to a central account management computer 115 adapted to manage customer accounts of registered customers. Similarly, the central account management computer may manage customer accounts related to other petrol stations. Alternatively, the management of customer accounts may be performed by a computer system of a bank or the like which manages the authorisation of electronic credit card transactions and initiates their capture. Such an external management system will be referred to as an external collector system. A collector system may act as a front-end to a financial network of participating banks and resolve the security based on a public key infrastructure (PKI) before forwarding transactions to the corresponding bank. As in known credit card processing procedures, the collector system may "collect" transactions from the petrol station into batch jobs, and exchange the transactions with the corresponding bank on a regular basis. The exchange of batch jobs is referred to as "capture". For example, the capture may be initiated at the end of a business day. It should be noted that, according to this embodiment, no money is moved between accounts before the capture phase.
In an alternative embodiment, the management of customer accounts is performed locally by the control computer 108 or another computer on the LAN of the petrol station.

The mobile terminal 110 is Bluetooth enabled, i.e. it comprises a Bluetooth transceiver. In one embodiment, the mobile terminal 110 may further comprise software adapted to perform the method according to an embodiment of the invention cooperatively with the pump control system of the petrol station. The software may be part of the firmware of the mobile terminal 110, or it may be stored in a memory of the mobile terminal 110. The mobile terminal 110 may further have stored in it secret signatures corresponding to one or more credit cards or customer cards. For example, the mobile terminal 110 may have stored in it two key pairs, an authentication key pair and a signature key pair, e.g. according to a standard encryption algorithm such as the RSA encryption and authentication system. The authentication key pair is used to establish an encrypted connection between the mobile terminal and the transceiver. The signature key pair is used to digitally sign transactions in order to achieve non-repudiation. Furthermore, the mobile terminal may have stored in it certificates authenticating the public authentication and signature keys. The authentication certificates may be exchanged between the protocol stacks of two parties when a secure connection is established. The signature certificates enable the parties to perform specific actions: The customer's signature certificate represents an electronic credit card. It enables the customer to digitally sign payment contracts issued by a merchant.

Preferably, the software or parts thereof and the signatures may be stored on a removable storage module, such as a smart card, e.g. a SIM card of a mobile telephone. This has the advantage, that the software and the signatures, PIN codes, etc. may be used in connection with different mobile terminals.

The system may further comprise a printer 112 for printing receipts to the customer. The printer may be connected to the control computer, e.g. via the LAN, or it may be controlled by the pump control circuit of one of the pumps.

The system may further comprise traditional pump control terminals (not shown) with a credit card reader and/or means for receiving cash, where a customer may select a pump and charge the corresponding amount to a credit card or prepay for a certain amount of gas. it is noted that traditional pump control terminals have the disadvantage that only one customer per terminal may initiate a transaction, thereby generating a possible bottleneck for the total customer throughput of a petrol station.

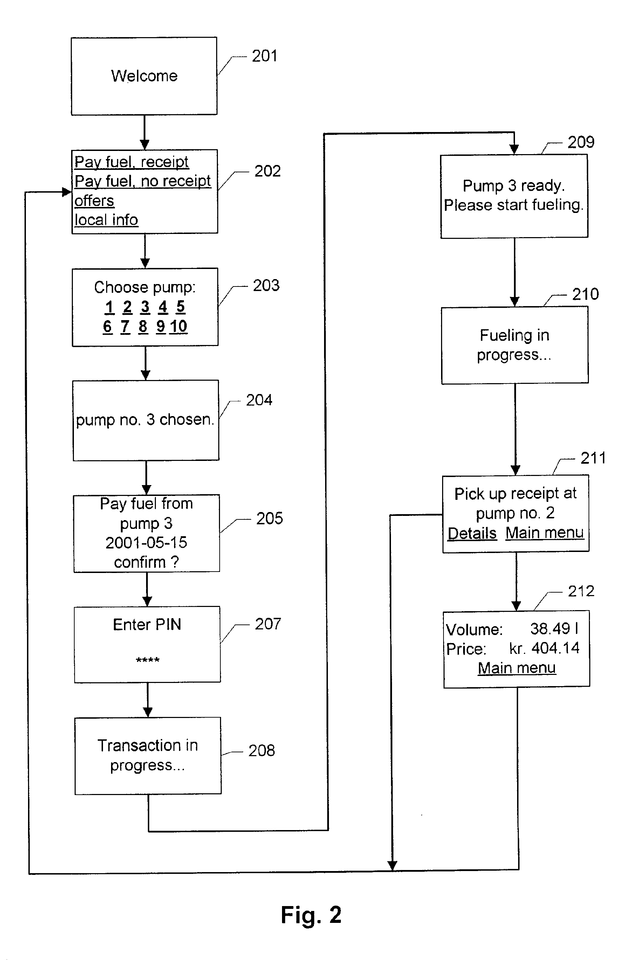

When the car 109 with the mobile terminal 110 on board enters the petrol station, the Bluetooth enabled mobile terminal 110 is, preferably, in a discoverable mode, i.e. it is ready to respond to an inquiry of another Bluetooth device. The mobile terminal 110 may permanently be in a discoverable mode when turned on or, alternatively, it may have to be put into a discoverable mode manually, e.g. by pressing a corresponding button or by selecting a corresponding menu item via the user interface of the mobile terminal, thereby reducing the power consumption of the mobile terminal. When the mobile terminal 110 reaches the range of radio coverage of the transceiver 106, the transceiver 106 establishes a Bluetooth link to the mobile terminal 110. Hence, the mobile terminal 110 gains access to the control computer 108 via the Bluetooth link, the transceiver and the LAN. Furthermore, connections on higher layers of a corresponding protocol stack are established between a control software application running on the control computer and a corresponding client application running on the mobile terminal 110. For example, the communication between the control software application and the mobile terminal may utilise WAP pages and WML/WMLS with Bluetooth as a carrier. In another embodiment, a software application, such as a Java program, may be transmitted from the vending system to the mobile terminal when the communications link is established. After establishment of the communications link the process of fuelling the car may be initiated from the mobile terminal, even while the customer still is sitting in the car. This will be described in connection with figs. 2-4.

Fig. 2 shows a schematic view of a series of screen pictures displayed by a mobile terminal according to an embodiment of the invention in a petrol station scenario as described in connection with fig. 1.

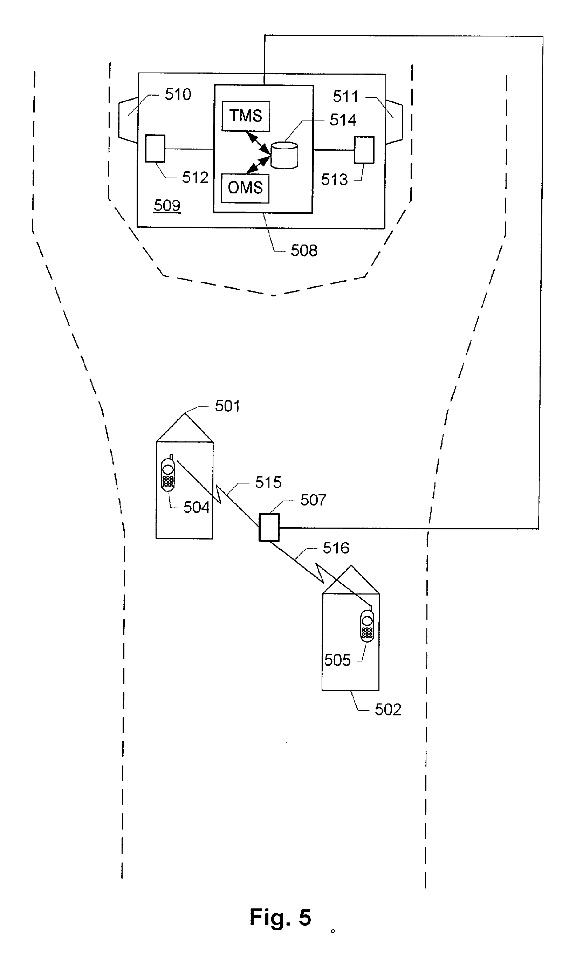

When the car 109 enters the petrol station and the corresponding mobile terminal 110 enters the area of radio coverage, a welcome menu 201 is presented, followed by a main menu 202, e.g. after a few seconds as determined by an internal software timer. The welcome screen may comprise a welcome message, a logo and/or the like. The welcome screen may further trigger an audible message, e.g. a beep sound or a sequence of tones, in order to catch the customer's attention. The main menu 202 presents the options available to the user, e.g. in the form of WAP hyperlinks. The options may include "fuelling, with receipt", i.e. purchasing of petrol where the customer wishes a printed receipt, and "fuelling, no receipt", if the customer does not need a printed receipt. Further options may be displayed allowing the customer to gain access to additional services, e.g. advertisement. If the customer selects one of the fuel options, e.g. by using the navigation keys of the keypad of the mobile terminal, a request is sent to the control computer 108 as will be described in connection with fig. 4. In response to that request, the mobile terminal receives a list of available pump numbers which are displayed in the following menu 203 as selectable options. When the customer selects one of the available pumps, an acknowledgment is displayed as a next screen 204. In an alternative embodiment, if the mobile terminal has multiple credit card certificates stored in it, the user may further be prompted to select one of the cards. The control computer creates a new transaction for the selected pump and sends an electronic contract to the mobile terminal where it is displayed (screen 205). Preferably, the contract includes the date, time, name and/or address of the petrol station, and a serial number, thereby generating a unique identification of the contract. If the contract contains more text than can be simultaneously displayed on the display of the mobile terminal, the text may, for example, be scrolled automatically. The customer accepts the contract, e.g. by pressing a "YES" button on the mobile terminal. After the contract is accepted, the customer is prompted to enter a PIN for the payment card (screen 207). When the PIN has been correctly entered, a subsequent screen 208 informs the customer that the authorisation is in progress. If the authorisation is performed by a central account management computer, the control computer requests payment authorisation from the central account management computer. If authorisation is granted, the control computer receives an acknowledgement that money may be transferred from the customer account. When the authorisation process is completed successfully, the customer is prompted to start the actual fuelling at the selected pump (screen 209). When the customer picks up the nozzle of the corresponding pump and starts fuelling the car, the screen of the mobile terminal changes to screen 210, indicating that the fuelling is in progress. Alternatively or additionally, the amount of dispensed petrol and the corresponding price may be displayed continuously or periodically on the screen of the mobile terminal. Alternatively, promotional messages may be displayed to the customer and/or a menu providing additional services, such as downloading music content, playing games, etc. When the nozzle is put down, the next screen will be displayed. Alternatively or additionally, a message may be displayed and/or an audible indication may be provided when the pump stops, e.g. because the tank is filled up. If the user has requested a receipt, the next screen 211 informs the customer where the receipt may be picked up. The screen may further include a link to a screen 212 showing further details, such as the amount of petrol purchased and the corresponding price. Both, screen 211 and 212, include links back to the main menu 202. If the user did not request a receipt, the detail screen 212 may be shown directly when the nozzle is put down. Alternatively, instead of screen 211, a screen may be displayed which reminds the customer that no receipt was requested.

It is understood that in the above scenario alternative screens may be displayed. For example, the customer may not need to decide before the fuelling whether or not to request a receipt. For example, after the fuelling process is completed, a screen with two hyperlinks corresponding to an optional request for a receipt may be displayed, instead. Furthermore, deviations from the above sequence may occur, e.g. because the selected pump may not be ready, an incorrect PIN may be entered, the user may abort the transaction by pressing a "NO" button on the mobile terminal, a transaction may time out, etc. Preferably, in these cases appropriate alternative screens, error messages, and/or dialogs are presented to the user informing him about possible alternative actions and/or including appropriate links, e.g. back to the main menu.

It is an advantage of the invention, that a major part of the interaction between the customer and the pump control system may be performed via the mobile terminal. Hence, the customer may stay in the car while selecting a pump, authorising the payment, etc. The customer may even return to the car during the fuelling process, as the customer may receive an indication when the fuelling process is finished. This may be a particular advantage in cold or windy weather when it is unpleasant to wait outside, or if the customer has small children in the car who the customer needs to attend to. It is a further advantage of the invention that the user interface of the pump may be kept at a minimum, as the pump control may be carried out via the user interface of the mobile terminal, thereby utilising existing hardware.

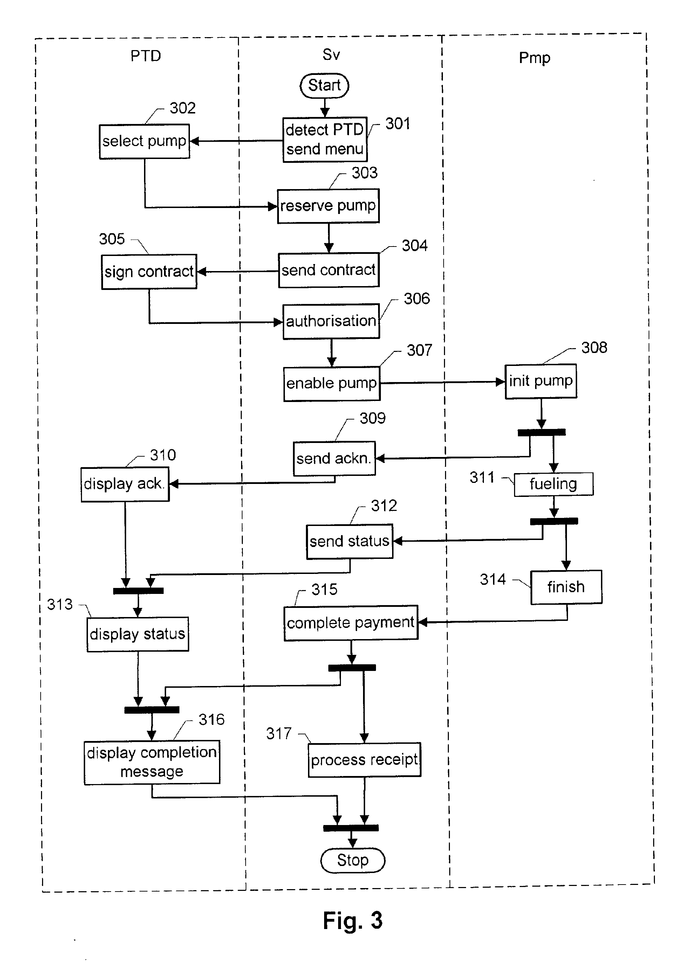

Fig. 3 shows a flow diagram of a method of supplying fuel by a pump control system according to the first embodiment of the invention. The flow diagram in fig. 3 refers to the system illustrated in fig. 1, and it is arranged in three columns labelled PTD, Sv and Pmp, thereby indicating which steps are performed by the mobile terminal 110, the control computer 108, and the pump control circuit 102a, respectively. Initially, when a car with a mobile terminal enters the petrol station, a Bluetooth link is established between a Bluetooth access point and the mobile terminal. As the transceivers are connected with the control computer, the control computer detects the presence of the mobile terminal and sends information about the available options and available pumps to the mobile terminal (step 301), e.g. by pushing a WAP page. When the customer, in step 302, selects a pump via the user interface of the mobile terminal, an identification of the selected pump is sent to the control computer via the Bluetooth link. It is noted that the pump selection 302 may comprise several messages communicated between the control computer and the mobile terminal. For example, if the pump supplies different types of petrol, a selection of a certain type of petrol may be sent from the mobile terminal to the control computer. Furthermore, the control computer may generate a new fuelling transaction record in a database hosted by the control computer or, alternatively, by a different computer connected to the control computer. The transaction record may include a transaction ID, information about the corresponding mobile terminal, e.g. its Bluetooth device address, status information about the transaction including the status of the corresponding pump and the status of the corresponding payment. For example, possible transaction states of a transaction may comprise the following states:
- Open:: A new transaction record has been created with a corresponding transaction ID.
- Offered:: The transaction has been tied to a pump, and the pump is reserved in the database. The customer has been issued a payment contract to sign. Preferably, only one transaction may be offered per pump.
- Signed:: The customer has signed the payment contract and it has been forwarded to the collector. Preferably, only one transaction may be signed per pump.
- Authorised:: The collector has authorised the payment. Preferably, only one transaction may be authorised per pump.
- Ready:: The pump is ready for fuelling. Preferably, only one transaction may be ready per pump.
- Fuelling:: The nozzle has been lifted and the fuelling is in progress. Preferably, only one transaction may be "fuelling" per pump.
- Finished:: The nozzle has been put down.
- Completed:: An amount is connected to the payment, and a paper receipt has been printed if requested.

Additionally, a transaction may be related to further states, such as error states. When the control computer receives the pump ID, in step 303, the selected pump is marked occupied and cannot be selected by another mobile terminal until the current transaction is completed or aborted. In the subsequent step 304, a digital contract is sent to the mobile terminal, where it is displayed and, upon accept by the customer, signed with the customer's digital signature (step 305). For example, the customer's digital signature may be associated with a PIN code stored in the mobile terminal. When the customer enters the PIN code as an authorisation of the contract, the corresponding signature is associated with the contract. Hence, according to this embodiment, the PIN code is not transmitted as part of the signed contract, but only stored locally on the mobile terminal, thereby increasing the security of the system. In step 306 the returned signed contract is authorised locally or by a central account management system or an external collector system. Upon successful authorisation, in step 307, the control computer sends a control signal to the control circuit of the selected pump, thereby enabling the pump. In response to that signal, in step 308, the control circuit initialises the pump. This initialisation 308 may include a reset of the meter measuring the dispensed volume. If the customer has selected a certain type of petrol, the control circuit may also be controlled to make the appropriate settings. Preferably, upon completion of the initialisation, the pump control circuit sends a control signal back to the control computer. Subsequently, in step 309, the control computer updates the state of the transaction in the database to "ready", and sends an acknowledgement to the mobile terminal which, in step 310, displays a corresponding message including the number of the pump. When the customer starts the fuelling process 311 by lifting the nozzle off the pump and starting to fuel the car, the pump control circuit detects that the fuelling has started, and it sends a corresponding signal to the control computer. For example, the control computer may detect when a certain amount of petrol, e.g. 1 dl, has been dispensed. In response to this signal, the control computer updates the state of the transaction to "fuelling" and sends a status message to the mobile terminal (step 312) which displays a corresponding status message (step 313). When the fuelling process is finished and the nozzle is put down, the pump control circuit sends a corresponding signal and the dispensed quantity to the control computer (step 314). Subsequently, in step 315, the control computer determines the corresponding amount to be paid, completes the payment transaction with the correct amount and sends a message to the mobile terminal acknowledging the completion of the fuelling transaction. In step 316, the mobile terminal displays a corresponding message, while the control computer initiates the printing of a receipt if requested (step 317).

It is noted, that in the above example, the actual amount to be paid is not known at the time of the signing of the contract and the authorisation. The actual amount is first known after the fuelling is completed. It is an advantage of the invention, that the actual amount to be paid does not need to be known prior to the actual purchase. Instead, the authorisation in step 306 may, for example, be performed for a default amount and, after completion of the fuelling, the amount is corrected to the actual amount.

Fig. 4 shows a schematic view of a message flow between the components of the system of fig. 1. In fig. 4, vertical lines correspond to the different components of the system and illustrate a logical flow from top to bottom. Arrows between columns indicate messages communicated between the corresponding components, where solid arrows correspond to messages and dashed arrows correspond to replies to messages. Dotted arrows correspond to updates and/or queries of the database 404 where the transactions are stored together with their respective status and identified by respective transaction IDs. The columns labelled PTD, AccMan, and Pmp correspond to the mobile terminal 110, the central account management system 115 and the pump control circuit 102a, respectively. The control computer 108 is represented by two columns labelled Sv1 and Sv2, corresponding to two server processes of a pump control application running on the control computer 108. The server processes Sv1 and Sv2 are responsible for the communication with the mobile terminal and the Pump control circuit, respectively. The two server processes will also be referred to as PTD servlet SV1 and Pmp servlet Sv2, respectively, as they may be implemented as Java servlets. The two server processes may communicate via updates of the database 404 hosted by the control computer. Alternatively, the database 404 may physically be located on a different computer, and/or the two processes may be executed on separate computers or they may be implemented by a single process. The vertical lines further comprise boxes illustrating operations being performed by the corresponding components. Arrows starting and ending at the same column correspond to control flows within the same process, such as loops.

In the example of fig. 4, a Bluetooth link has been established between the mobile terminal and a Bluetooth transceiver functioning as an access point of the pump control system. When the customer selects "Pay fuel" on the mobile terminal, the mobile terminal sends an initialisation request 401 to the PTD servlet Sv1. For example, the request 401 may be a WSP GET request, e.g. "http://someserver/servlets/PTDServlet", where the PTD provides no query part in the request URL. This indicates that a new transaction is requested. In response to this request, the PTD servlet Sv1 creates a new transaction record in the database 404 and returns a reply 403 comprising a list of available pumps. Preferably, the transaction record is related to a transaction ID which, for example, may comprise a 14-digit integer containing a 4-digit year, a 2-digit month, a 2-digit day, and a 6-digit serial number. An example of such an ID is "2001012123456." When the customer has selected one of the pumps, a contract request 405 comprising the selected pump number is sent from the mobile terminal to the PTD servlet Sv1. Subsequently, in step 406, the PTD servlet Sv1 issues a contract to the PTD (response message 407), records the contract and updates the state of the transaction record to "offered". For example, the contract response 407 may comprise the transaction ID followed by the contract text. Preferably, the contract text should be in plain text and it should follow a predetermined syntax. An example contract is "Pay fuel from pump 3, 2001-04-02, FooGas, CPH." Preferably, the text is adapted to the customer's language. Preferably, the text should be sufficiently short to be fully visible in the display of the PTD. When the contract is signed, the PTD may automatically include a UTC timestamp in the signature returned to the control computer. This makes the signature unique, assuming that the customer cannot sign more than one contract per second. Consequently, the account management system can ensure that a signed contract can only be used once for authorisation. The contract is displayed to the customer by the PTD, and the customer is requested to electronically sign it. Once the contract is signed, the corresponding digital signature is returned to the PTD servlet Sv1 via a start request 408. For example, the start request 408 may comprise a WSP GET request including the transaction ID and the customer's digital signature in the query part of the URL. The signature may further comprise an URL to the customer's certificate, e.g. in the format specified in WAP 1.2 signText() description including base64 encoded binary data using escape sequences for characters otherwise not allowed in an URL. Preferably, the customer certificate comprises the following fields:
- Serial number:: The serial number of the certificate assigned by the certification authority (CA).
- Signature algorithm:: Preferably a secure hash algorithm (SHA-1) with RSA encryption.
- Issuer:: Distinguished name of the CA as specified by the standard RFC2459 (X.509 certificate profile).
- Subject:: Distinguished name of the customer as specified by RFC2459 (X.509 certificate profile).
- Subject Public Key Info:: The customer's public RSA key.
- Validity:: Validity period of customer's certificate. Represented using UTC time.
- Extensions:: SubjectAltName: encrypted track 2 information, i.e. card number and expire date.
KeyUsage: digitalSignature and nonRepudiation)

Preferably, the track 2 information is encrypted using the public RSA key of the petrol station or petrol company, ensuring that it can only be decrypted by the petrol station application. Preferably, only the encrypted bytes are used, i.e. no encapsulation according to the cryptographic message syntax standard PKCS#7. Hence, an example of the start request 415 may be "http://someserver/servlets/PTDServlet?id=20001012123456& signature=kFr4G78i45e46h8g5+4HFi4Ut78H5DDhGKj7bi66nswe." In step 410, the PTD servlet Sv1 stores the signature in the database 404, updates the state of the transaction to "signed", and forwards the transaction information to the central management system AccMan as an authorisation request 411. For example, the authorisation request may be implemented using a secure (SSL v.3) HTTPS POST request. The request parameters are passed to the management system as a signed XML document in the request body. The document may comprise the following elements:
- ID:: The transaction ID (equal to the ID in the signed contract), e.g. a 14 digit integer. The ID is made up of a 4-digit year, a 2-digit month, a 2-digit date, and a 6-digit serial number.
- ACCEPTOR:: Identification of the petrol station extracted from the certificate of the petrol station, e.g. a 20-digit number constructed by concatenating the organisation and card acceptor id numbers.
- CONTRACT:: The contract signed by the customer, e.g. Base64-encoded data.

The "CONTRACT" element is constructed by the pump control application, e.g. by the following steps:
- The signed contents received from the PTD are decoded (e.g. base64 and ASN-1/DER) into a data structure as specified in the WAP 1.2 WML script cryptography library specification.
- The contract text is inserted into the data structure.
- The data structure is transformed from WAP standard to PKCS#7 layout and encoded according to PKCS#7.
- The resulting binary data is base64 encoded.

In the above example, it is assumed that the petrol station can be uniquely identified from the "ACCEPTOR" element and, combined with the transaction ID, the request can be uniquely identified. The account management system compares the "ACCEPTOR" element with the contents of the corresponding certificate and verifies the identity of the petrol station. The locale of the contract may be used when parsing the contract text to extract the total amount and the identity of the petrol station. This allows the account management system to handle contracts in multiple languages and with multiple number formats, e.g. comma instead of dot as decimal separator. An example of an authorisation request comprising the above fields is
"<!xml version=1.0/>
<MeTAuthorisationRequest>
<ID>20001012123456</ID>
<ACCEPTOR>74967396749673967385</ACCEPTOR>
<CONTRACT>kFr4G78i45e46h8g5+4HFi4Ut78H5DDhGKj7bi66nswe</C
ONTRACT>
</MeTAuthorisationRequest>."

In step 412, the management system AccMan processes the authorisation request and returns an authorisation response 413, e.g. as a signed XML document. For example, the document may contain the following fields:
- ID:: Transaction ID
- ACCEPTOR:: Identification of petrol station.
- STATUS:: Indicates whether authorisation was granted.
- MAX:: The maximum amount authorised.

Preferably, the authorisation response contains sufficient information to prove that a particular amount of money has been reserved for a particular acceptor. An example of such a document is
"<!xml version=1.0/>
<MeTAuthorisationResponse>
<ID>20001012123456</ID>
<ACCEPTOR>74967396749673967385</ACCEPTOR>
<STATUS>0</STATUS>
<CURRENCY>DKK</CURRENCY>
<MAX>1000</MAX>
</MeTAuthorisationResponse>."

In response to the authorisation response 413, the PTD servlet Sv1 updates the state of the transaction to "authorised" and returns a start response 414 to the PTD, causing the PTD to display a corresponding message to the customer. The payment response indicates whether authorisation was granted and, if the payment was authorised, at which pump fuelling may be started. The number of the pump is displayed as part of the confirmation to the customer on the PTD. If the authorisation fails, the response includes the reason for the failure. The reasons are used by the PTD to select an appropriate error message to display to the customer. After displaying the message, the mobile terminal enters a polling loop 418 during which it sends status requests 415 to the control computer and awaits corresponding responses 417.

When the Pmp servlet Sv2 discovers that the state of the transaction has been changed to "authorised", it sends a start signal 423 or a message comprising a start command to the pump control circuit. Subsequently, the servlet Sv2 enters a loop 422 waiting for status signals from the pump. The start signal 423 causes the pump control circuit to initialise the pump so the pump is ready to start fuelling. When the customer lifts the nozzle from the pump and starts fuelling, this is registered by the pump control circuit which sends a corresponding signal 424 to the control computer, causing the servlet Sv2 to update the state of the transaction to "fuelling".

This, in turn, causes the servlet Sv1 to send a corresponding status message 417 to the mobile terminal in response to the next status poll 415 of the polling loop 418. In response to this message, the mobile terminal displays a corresponding message indicating that the fuelling is in progress. During the fuelling of the car, additional messages or signals may be sent from the pump control circuit to the control computer indicating the status of the fuelling, e.g. the amount of petrol that has been dispensed or whether the pump has stopped. These additional signals may also be forwarded to the mobile terminal enabling it to present further status information to the customer.

When the customer terminates the fuelling process and puts down the nozzle, the pump control circuit sends a corresponding signal 425 including the total amount of petrol to the control computer. In response to that signal, the servlet Sv2 updates the state of the transaction to "finished", stores the amount of petrol in the corresponding record of the database, and returns a stop signal 426 to the pump.

When the servlet Sv1 detects that the state has been changed to "finished", it calculates the amount to be paid based on the amount of petrol registered in the database. Subsequently, the srvlet Sv1 sends a balance request 419 to the account management system, causing it to complete the authorised transaction with the actual amount. For example, the authorisation request may comprise a secure (SSL v.3) HTTPS POST request including a signed XML document in the request body. The document may comprise the following elements:
- ID:: The transaction ID.
- ACCEPTOR:: Identification of the petrol station.
- BALANCE:: The actual amount to be charged.

The account management systems updates the corresponding transaction and returns an acknowledgement 421 to the servlet Sv1 which, in turn, updates the state of the transaction to "completed" and sends a corresponding message 427 to the mobile terminal including the amount of petrol and the corresponding amount paid. This information may then be displayed by the mobile terminal. Preferably, the actual transfer of money from the customer's account to an account of the petrol company is performed during a subsequent capture transaction between the account management system or the external collector system and a bank or other financial institution. For example, the account management system may collect all transaction records of a business day and, at the end of that business day, transmit a batch request to a corresponding bank, thereby initiating the capture of all payments corresponding to the collected transactions.

It is noted, that the payment in the above example may be performed using an electronic general purpose credit card, where the authorisation is performed by an external collector system. Alternatively or additionally, other electronic payment card schemes may be employed. For example, a customer may have an account with the petrol station and periodically receive a bill for the total purchases, or the customer may prepay a predetermined amount. In this case, the account information may be stored in a local database on the control computer or another computer on the LAN, and the authorisation process may be performed locally without involving an external collector system or a central account management system.

It should further be noted, that the flow described in connection with fig. 4 utilises polling. The use of polling solves the problem that WSP and HTTP GET requests may time out. Consequently, a response to a GET request may not be arbitrarily delayed, thereby limiting the maximum waiting time which may be implemented. In particular, this is a disadvantage in cases where the execution of the flow requires human interaction, i.e. where fixed response times cannot be guaranteed. The use of polling solves this problem, as the waiting is implemented in the requesting device, allowing the application to respond immediately to a GET request. Alternatively, the timeout problem with WSP requests can be avoided using WAP push technology by pushing an URL to the PTD. This has the further advantage that it avoids unnecessary delays of the polling technique. Using polling, in a worst case scenario, the maximum sleep intervals of all polling loop should be added to the time it takes to complete a transaction.

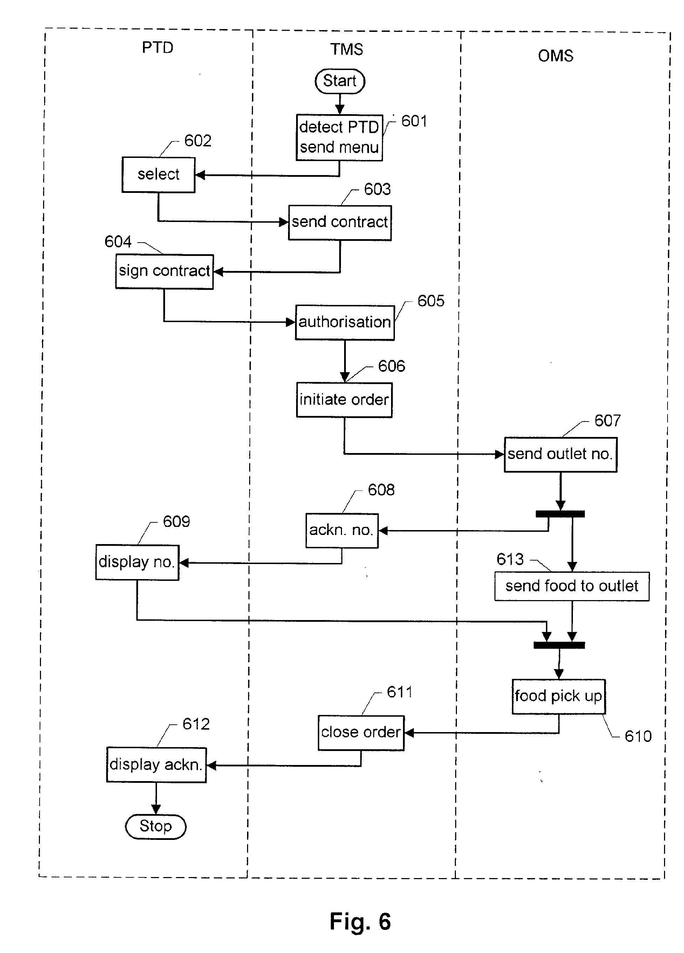

Fig. 5 shows a schematic view of a fast food vending system according to a second embodiment of the invention. In the example of fig. 5, a drive-through fast food restaurant 509 is illustrated, where customers may place orders from their cars 501-502 and pick up the ordered food and beverages at one of a number of outlet points 510-511 which may be staffed with an operator. The system further comprises a computer 508 controlling the processing of the received orders, e.g. by means of an order management software application OMS running on the computer 508. Preferably, the outlets 510-511 each comprise a terminal 512-513, respectively, e.g. a computer with a display and a keyboard. In traditional drive-through restaurants a customer first stops at a first point where the order is placed, for example via an intercom system to an operator, and continues afterwards to the an outlet point associated with the ordering point. This implies that the orders are processed sequentially at a speed which is limited by the slowest of the processes of ordering, preparing the food, and dispensing the ordered food. According to the embodiment of the invention illustrated in fig. 5, the ordering and the dispensing of the food may be performed for several customers in parallel. The system illustrated in fig.5 further comprises a Bluetooth transceiver 507 which is located in the forecourt of the restaurant and connected to the computer 508, e.g. via a local area network, and which serves as a network access point. Preferably, the transceiver 507 operates in inquiry mode, i.e. attempting to establish Bluetooth communications links with other Bluetooth devices within its area of radio coverage. According to the invention, the customer in the car 501 has a Bluetooth enabled mobile terminal 504 which is in a discoverable mode. When the mobile terminal reaches the area of radio coverage of the transceiver 507, a Bluetooth link 515 is automatically established between the transceiver 507 and the mobile terminal 504, thereby providing access to the computer 508. Preferably, the control computer is adapted to execute a transaction management software application TMS which processes the orders and payment transactions received from mobile terminals. The transaction and order management systems OMS and TMS, respectively, may further have access to a transaction database 514 for storing transaction and order information. Consequently, the customer may place an order and pay for it by communicating with the computer 508 via the user interface of the mobile terminal 504. This will be described in greater detail in connection with fig. 6. After placing the order the customer is informed by the computer 508 via the user interface of the mobile terminal at which of the outlet points 510-511 the ordered food may be picked up. Consequently, according to the invention several customers may place their respective orders simultaneously, thereby increasing the throughput of the restaurant. In the example of fig. 5, the car 502 has also reached the area of radio coverage and a Bluetooth connection 516 is established via the transceiver 507 and the mobile terminal 505. It is a further advantage of this embodiment of the invention that the computer 508 may control which orders are to be picked up at which outlet, e.g. based on the number of orders which are not yet picked up at the different outlets, or according to the type of food ordered, in order to optimise the work flow in the restaurant, or to allow for a quick check-out for preferred customers, etc. Hence, the overall throughput of the system may be optimised. Furthermore, the system is scalable to comprise a larger number of outlets and/or a larger area of radio coverage, e.g. by utilising a larger number of transceivers.

Fig. 6 shows a flow diagram of a method supplying fast food by a vending system according to an embodiment of the invention. The flow diagram in fig. 6 refers to the system illustrated in fig. 5, and it is arranged in three columns labelled PTD, TMS and OMS, thereby indicating which steps are performed by the mobile terminal 504, the transaction management application TMS, and the order management application OMS, respectively. Initially, when a car 501 with a mobile terminal 504 enters the forecourt of the drive-through restaurant, a Bluetooth link is established between a Bluetooth access point 507 and the mobile terminal 504. As the transceiver 507 is connected with the control computer 508 and communicates with the transaction management system TMS, the transaction management system TMS detects the presence of the mobile terminal and sends information about the available options and the available dishes and beverages to the mobile terminal (step 601). The dishes are displayed on the display of the mobile terminal, e.g. a scrollable list of selectable menu items. In step 602, the customer may select a number of menu items from the list via the navigation buttons of the mobile terminal. The selected items may be stored in the memory of the mobile terminal such that the customer may view and edit a list of selected items. When the selection is completed, the customer initiates the transmission of an order request comprising the list of selected menu items from the mobile terminal to the transaction management system TMS via the Bluetooth link. In the subsequent step 603, when the transaction management application on the control computer has received the list, it generates a new order transaction record in a database hosted by the control computer or, alternatively, by a different computer connected to the control computer. The transaction record includes a transaction ID, information about the corresponding mobile terminal, e.g. its Bluetooth device address, status information about the transaction including the list of ordered items and the status of the corresponding payment. In the subsequent step 603, a digital contract is sent to the mobile terminal, where it is displayed and, upon accept by the customer, signed with the customer's digital signature (step 604). In step 605 the returned signed contract is authorised as described in connection with step 306 of fig. 3 and in connection with fig. 4. It is noted, however, that in contrast to the petrol station example described above, the final total amount to be paid is already known by the transaction management application. Hence, the authorisation may comprise the actual total amount and does not have to be balanced later. Upon successful authorisation, in step 606, the transaction management system initiates the actual processing of the order, e.g. by sending a command or signal to the order management application OMS, or by updating the state of the transaction record in the database to "authorised" which, subsequently, is registered by the order management application. The order management application OMS controls the actual processing of the order, e.g. by informing operators which dishes to prepare or, in an automatic system, by directly controlling the corresponding machines via suitable control connections. In step 607, the order management application OMS further assigns an outlet number to the transaction which it communicates to the transaction management system, e.g. via a database update or via direct signalling. The outlet number is then, in step 608, sent by the transaction management system via the Bluetooth link to the mobile terminal which, in step 609, displays a message indicating that the ordered items may be picked up at the identified outlet. When the food is prepared, the order management application OMS causes the items to be sent to the specified outlet (step 613). Furthermore, the corresponding order information may be sent to a corresponding terminal at the outlet allowing an operator to identify the order. When the items are picked up by the customer (step 610), the operator may enter a pick-up confirmation into the terminal at the outlet, e.g. by pressing a button, causing the order management system to mark the order completed.

The above embodiments of the invention have primarily been described in connection with examples employing the technologies Bluetooth, WAP, and HTTP. However, other technologies as well as other ways of providing security and performing the transaction are understood to be within the scope of the current invention.

Furthermore, the invention has primarily been described in connection with the purchase of petrol at a petrol station and the purchase of food at a drive-through restaurant. It is understood, however, that the invention may be applied to other applications as well. Examples of such applications include the charging of goods in connection with the loading and/or unloading of trucks, e.g. the loading or unloading of material such as sand, concrete, feedstuff, corn, milk, oil, or the like, or the unloading of garbage at a garbage disposal site. The amount of material loaded/unloaded may be determined by weighing the truck during loading/unloading or by weighing the truck before and after the loading/unloading. In this context, a mobile terminal carried by the truck driver or installed in the truck may be used to authorise the charges associated with the loading or unloading of the products. For example, upon entry to a site, a connection may be established between the mobile terminal and a control system, e.g. via a Bluetooth access point. The driver may select a desired type of products and/or a desired outlet point, dock, or the like, and the driver may authorise the charging of the corresponding amount. When the loading/unloading is completed, the actual quantity loaded or unloaded and the corresponding charges may be displayed to the driver and the corresponding payment transaction may be initiated, e.g. the payment for the received products, the payment for the disposal of a certain amount of garbage, or the like. Hence, the driver does not need to leave the truck during the entire process, thereby increasing the efficiency of the loading process.

## Claims

1. A method of supplying and/or receiving goods by a transaction system with a number of transaction points (101,102,103,104;510,511) to/from a customer using a mobile terminal (110;504,505), the method comprising the step of establishing (301;601) a wireless communications link (116;515,516) between the transaction system and the mobile terminal;
**characterised in that**
the method further comprises the steps of
- selecting (302;607) one of the number of transaction points;
- communicating (608) at least a first data item (405) via the wireless communications link between the transaction system and the mobile terminal indicative of the selected transaction point; and
- providing and/or receiving (308;613) said goods to/from the customer at the selected transaction point.

2. A method according to claim 1, **characterised in that** the method further comprises the step of communicating (305;604) a second data item (408) via the wireless communications link between the mobile terminal and the transaction system indicating an authorisation to transfer a predetermined amount from a predetermined customer account.

3. A method according to claim 1 or 2, **characterised in that** the step of communicating at least a first data item further comprises the steps of
- transmitting (301) a third data item (403) from the transaction system to the mobile terminal indicative of a list of selectable transaction points;
- presenting (203) at least a part of the list of selectable transaction points to the customer; and
- transmitting the first data item from the mobile terminal to the transaction system in response to an input received from the customer.

4. A method according to claim 3, **characterised in that** the list of selectable transaction points is generated by the transaction system according to customer profile data stored on a storage medium accessible to the transaction system.

5. A method according to claim 1 or 2, **characterised in that** the method further comprises the step of assigning a predetermined transaction point to the mobile terminal by the transaction system; and the step of communicating at least a first data item comprises the step of transmitting the first data item from the transaction system to the mobile terminal.

6. A method according to any one of the claims 1 through 5, **characterised in that** the method further comprises the step of transmitting a fourth data item from the mobile terminal to the transaction system indicative of a number of goods selected by the customer.

7. A method according to claim 6, **characterised in that** the method further comprises the step of transmitting a fifth data item from the transaction system to the mobile terminal indicative of a list of selectable goods.

8. A method according to claim 7, **characterised in that** the list of selectable goods is generated by the transaction system according to customer profile data stored on a storage medium accessible to the transaction system.

9. A method according to any one of the claims 1 through 8, **characterised in that** the step of establishing a wireless communications link comprises the steps of
- detecting the presence of the mobile terminal in a predetermined proximity of the transaction system by the transaction system; and
- initiating establishing the wireless communications link by the transaction system.

10. A method according to any one of the claims 1 through 9, **characterised in that** the step of providing and/or receiving said goods to/from the customer further comprises the steps of
- detecting (314) at least one of a quantity and a type of the goods provided to and/or received from the customer; and
- transmitting (315) a sixth data item (427) from the transaction system to the mobile terminal indicative of the detected quantity and/or type of goods provided to and/or received from the customer and a corresponding total price.

11. A method according to any one of the claims 1 through 10, **characterised in that** the wireless communications link is a Bluetooth link.

12. A method according to any one of the claims 1 through 11, **characterised in that** the wireless communications link uses a WAP protocol.

13. A method according to any one of the claims 1 through 12, **characterised in that** the mobile terminal is a mobile telephone.

14. A method according to any one of the claims 1 through 13, **characterised in that** the transaction points comprise petrol pumps at a petrol station.

15. A method according to claim 14, **characterised in that** the method comprises the steps of
- detecting the presence of the mobile terminal in a predetermined proximity of the transaction system;
- establishing the wireless communications link;
- in response to an input by the customer, transmitting an sevenths data item indicative of a selected petrol pump from the mobile terminal to the transaction system;
- transmitting an electronic contract from the transaction system to the mobile terminal;
- in response to an input by the customer, transmitting an electronically signed contract from the mobile terminal to the transaction system;
- initiating authorisation of the signed contract by the transaction system;
- fuelling a car from the selected petrol pump;
- detecting and transmitting to the mobile terminal status information about the fuelling of the car by the transaction system.

16. A transaction system for supplying and/or receiving goods to/from a customer carrying a mobile terminal, the transaction system including a number of transaction points (101,102,103,104;510,511) for providing and/or receiving said goods to/from the customer; and communications means (106,107;507) for establishing a wireless communications link between the transaction system and the mobile terminal;
**characterised in that**
- the system further comprises means (108;OMS) for selecting one of the number of transaction points; and
- the communications means is adapted to communicate at least a first data item via the wireless communications link between the transaction system and the mobile terminal indicative of the selected transaction point.

17. A transaction system according to claim 16, **characterised in that** the transaction system comprises processing means (108;TMS) connected to the communications means and adapted to manage an electronic transaction between the mobile terminal and the transaction system.

18. A transaction system according to claim 17, **characterised in that** the processing means is adapted to select one of the number of transaction points and to cause the communications means to transmit an identification of the selected transaction point to the mobile terminal.

19. A transaction system according to claim 17, **characterised in that** the communications means is adapted to receive the first data item indicative of the selected transaction point from the mobile terminal, and the processing means is adapted to generate control signals for controlling the selected transaction point.

20. A transaction system according to any one of the claims 16 through 19, **characterised in that** the transaction points each comprise a corresponding control circuit adapted to control the transaction point in response to control signals generated by the processing means.

21. A transaction system according to claim 20, **characterised in that** the control circuits each comprise sensor means for detecting the status of the transaction point, and the control circuits are adapted to send corresponding status information to the processing means.

22. A mobile terminal adapted for use in a method according to any one of the claims 1 through 15.

23. A computer program comprising code adapted to perform the following steps when the program is run on a mobile terminal having established a wireless communications link with a transaction system including a number of transaction points adapted to provide and/or receive selected goods to/from a customer:
- selecting one of the number of transaction points;
- transmitting at least a first data item via the wireless communications link to the transaction system indicative of the selected transaction point; and
- receiving an acknowledgement that said goods have been provided to and/or received from the customer at the selected transaction point.

24. A computer program according to claim 23, **characterised in that** the computer program is embodied as a data signal.

25. A computer program comprising code adapted to perform the following steps when the program is run on a computer of a transaction system including a number of transaction points adapted to provide and/or receive selected goods to/from a customer carrying a mobile terminal:
- establishing a wireless communications link between the transaction system and the mobile terminal;
- cooperatively with the mobile terminal selecting one of the number of transaction points;
- determining that said goods have been provided to and/or received from the customer at the selected transaction point.

26. A computer program according to claim 25, **characterised in that** the computer program is embodied on a computer-readable medium.
